# EUROPEAN PATENT SPECIFICATION

(11) **EP 2 014 713 B1**
(45) Date of publication and mention of the grant of the patent: **08.09.2010**
(21) Application number: 06756325.4
(22) Date of filing: 25.04.2006
(51) Int. Cl.: C08L 23/08, B32B 27/30, B32B 27/32, C08L 25/04, C08L 29/04

(54) **RESIN COMPOSITION AND MULTILAYER STRUCTURE MAKING USE OF THE SAME**
HARZZUSAMMENSETZUNG UND MEHRSCHICHTSTRUKTUR, IN DER DIESE VERWENDET WIRD
COMPOSITION DE RÉSINE ET STRUCTURE MULTICOUCHES FAISANT USAGE DE CELLE-CI

(43) Date of publication of application: 14.01.2009
(73) Proprietor: The Nippon Synthetic Chemical Industry Co., Ltd., Osaka-shi, Osaka 531-0076 (JP)
(72) Inventor: ONISHI, Hideshi c/o The Nippon Synthetic Chemical Industry Co.,Ltd. Umeda Sky Building Tower East, Osaka 531-0076 (JP); MORIYAMA, Takamasa c/o The Nippon Synthetic Chemical Industry Co.,Ltd. Umeda Sky Building Tower East, Osaka 531-0076 (JP); INOUE, Kaoru c/o The Nippon Synthetic Chemical Industry Co.,Ltd. Umeda Sky Building Tower East,, Osaka 531-0076 (JP)
(74) Representative: Kuhnen & Wacker
(86) International application number: PCT/JP2006/308671
(87) International publication number: WO 2007/129369

(56) References cited:
- EP-A- 1 502 931
- WO-A-2005/105437
- JP-A- 09 278 952
- JP-A- 2000 290 458
- JP-A- 2004 359 965
- JP-A- 2004 359 965
- JP-A- 2006 096 369
- JP-A- 2006 096 369
- JP-A- 2006 096 370
- JP-A- 2006 096 370
- JP-A- 2006 096 815
- JP-A- 2006 096 816
- JP-A- 2006 096 816
- JP-A- 2006 124 672

## Description

### Technical Field

The present invention relates to a resin composition comprising a novel ethylene-vinyl alcohol copolymer (A) and a specific thermoplastic resin (B) as well as a multi-layer structure using the same. More specifically, it relates to a resin composition which is a recycled material of a multi-layer structure and can suppress generation of burned deposit or buildup without adding a specific additive as well as a multi-layer structure with good appearance which comprises the resin composition layer.

### Background Art

In general, an ethylene-vinyl alcohol copolymer (hereinafter, referred to as EVOH) is excellent in transparency, gas barrier properties, aroma retention property, solvent resistance, oil resistance and the like and has been used for various packaging materials, making the most use of such properties, such as a food packaging material, a pharmaceutical packaging material, an industrial chemical packaging material and an agricultural chemical packaging material. Generally, for the purpose of compensation for mechanical properties and moisture resistance of EVOH, it has frequently used as a multi-layer structure through lamination with an other thermoplastic resin and particularly, has frequently been used through lamination with a polyolefin-based resin or polystyrene. However, scraps and liners, trimmed edges, defective products and the like are formed in the multi-layer structure at the time when the structure is molded into a container, a bottle and again, a pulverized material thereof has been used as a recycled layer. However, the recycled layer is a blend comprising components of individual layers of the multi-layer structure. Particularly, in the recycled layer of EVOH and a polyolefin-based resin or polystyrene, degraded substances of resins such as burned deposit or buildup are incorporated into the recycled layer and thus the layer has a disadvantage that commercial value as a container is remarkably impaired.
As a method for solving such a problem, a dedicated additive to be added to the recycled layer is devised and an additive such as hydrotalcite or hydrotalcite solid solution has been proposed (see, e.g., Patent Documents 1 to 3).

Patent Document 1: JP-A-60-199040
Patent Document 2: JP-A-62-11748
Patent Document 3: JP-A-1-178543
JP 2006-096816 discloses a resin composition which is preferably produced by copolymerizing 3,4-diacetoxy-1-butene, a vinyl ester monomer and ethylene and saponifying the obtained copolymer. The resin composition has an excellent gas barrier property and impact resistance and keeping excellent transparency and gas barrier property even after the application of impact force.

### Disclosure of the Invention

### Problems that the Invention is to Solve

However, in the above method, increase in cost owing to the addition of a special additive cannot be avoided and also a resin to be a base of the additive should be matched to a resin to be a base of the recycled layer in order to achieve good compatibility with the recycled layer, so that it is necessary to prepare an additive which is compatible with the base resin of the recycled layer. Also, with regard to an addition amount, when the additive is added in a large amount, there arise a problem that appearance contrarily deteriorates and the like problem, so that it is found that the addition amount should be strictly controlled. From the above, it has been desired to develop a resin composition to be used in a recycled layer where generation of burned deposit or buildup, which is a problem peculiar to the recycled layer, is suppressed without adding such a special additive as well as a multi-layer structure comprising at least one layer of the resin composition layer.

### Means for Solving the Problems

As a result of the extensive studies in consideration of such situations, the present inventors have found that a resin composition comprising EVOH (A) comprising the following structural unit (1) and at least one thermoplastic resin (B) selected from polyolefin and polystyrene meets the above object and thus have accomplished the invention.

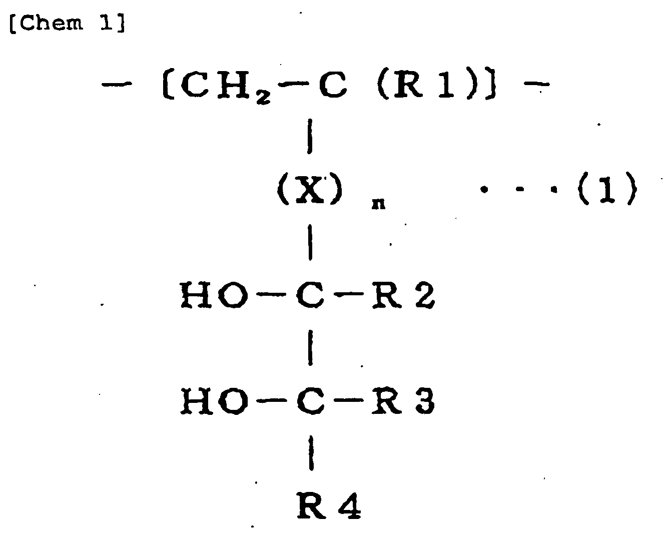

wherein X represents a bonding chain which is an arbitrary bonding chain excluding an ether bond, R1 to R4 each independently represents an arbitrary substituent, and n represents 0 or 1.
Moreover, in the invention, preferable embodiments are those that the structural unit (1) is introduced into a main chain of EVOH by copolymerization, a content of the structural unit (1) in EVOH is 0.1 to 30% by mol, and the resin composition is a recycled material of a multi-layer structure, and so forth.

### Advantage of the Invention

Since the resin composition of the invention comprises EVOR and at least one kinds of thermoplastic resin selected from polyolefin and polystyrene and the EVOH comprises a specific structural unit, the generation of burned deposit or buildup is suppressed and thus a multi-layer structure with good appearance can be obtained.

### Brief Description of the Drawings

[FIG. 1]

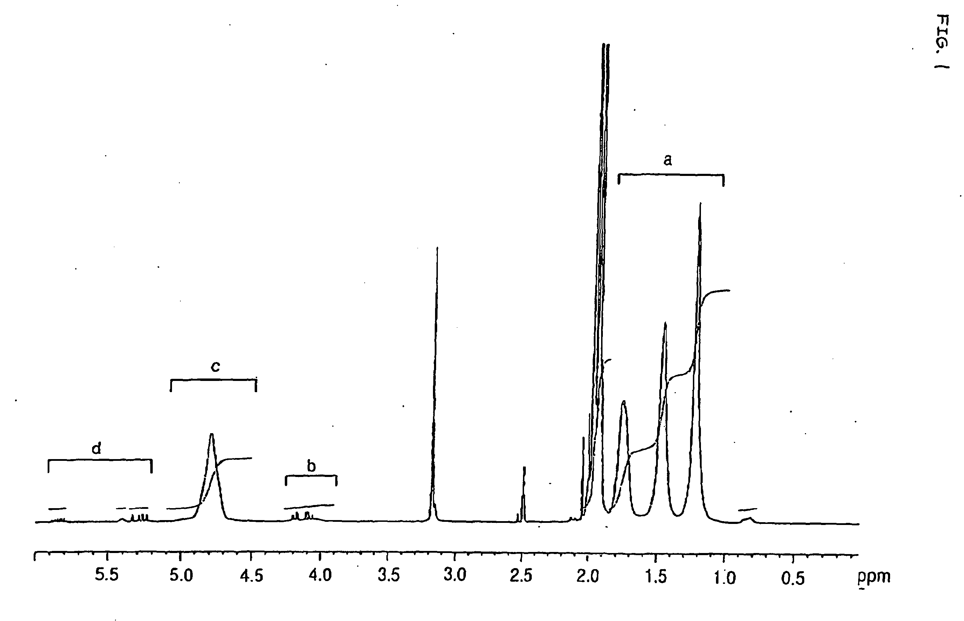

   FIG. 1 is a ¹H-NMR chart of EVOH obtained in Polymerization Example 1 before saponification.
[FIG. 2]

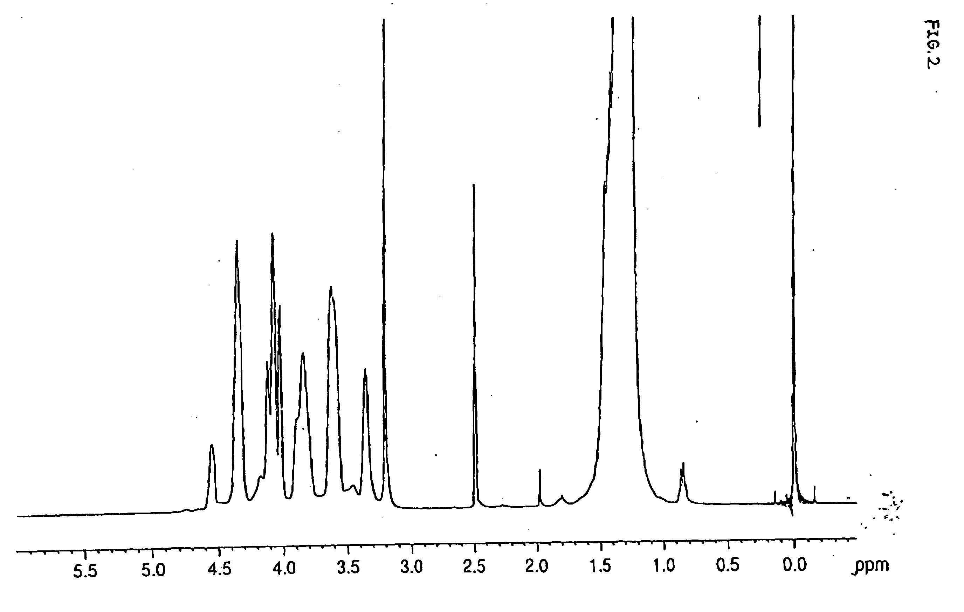

   FIG. 2 is a ¹H-NMR chart of EVOH obtained in Polymerization Example 1.

### Best Mode for Carrying Out the Invention

The following will specifically explain the invention.
The EVOH (A) to be used in the invention is EVOH comprising the above structural unit (1), i.e., a structural unit having 1,2-glycol bond. As the bonding chain (X) that bonds the molecular chain and the 1,2-glycol bond structure, any bonding chain excluding an ether bond can be applied. The bonding chain is not particularly limited but there may be mentioned hydrocarbons such as alkylene, alkenylene, alkynylene, phenylene and naphthalene (these hydrocarbons may be substituted with halogens such as fluorine, chlorine and bromine), and also -CO-, -COCO-, -CO(CH₂)ₘCO-, -CO(C₆H₄)CO-, -S-, -CS-, -SO-, -SO₂-, -NR-, - CON-, -NRCO-, -CSNR-, -NRCS-, -NRNR-, -HPO₄-, -Si(OR)₂-, - OSi(OR)₂-, -OSi(OR)₂O-, -Ti(OR)₂-, -OTi(OR)₂-, -OTi(OR)₂O-, -Al(OR)-, -OAl(OR)-, -OAl(OR)O-, (R each independently represents an arbitrary substituent, preferably a hydrogen atom or an alkyl group, and m is a natural number). An ether bond is not preferable because it is decomposed at melt molding and the thermal melt stability of the resin composition decreases. Of these, from the viewpoint of the thermal melt stability, alkylene is preferable as the binding species and alkylene having 5 or less carbon atoms is further preferable. From the viewpoint that gas barrier performance of the resin composition becomes satisfactory, the number of carbon atoms is preferably smaller and a structure wherein a 1,2-glycol bond structure, where n is 0, is directly bonded to a molecular chain is most preferable. Moreover, R1 to R4 can be an arbitrary substituent and are not particularly limited. From the viewpoint of easy availability of monomers, a hydrogen atom and an alkyl group are preferable. Furthermore, a hydrogen atom is preferable from the viewpoint of good gas barrier property of the resin composition.

The process for producing the above EVOH is not particularly limited. However, for example, in the case of the most preferable structure in which the 1,2-glycol bond structure is bonded directly to a main chain, there may be mentioned a method of saponifying a copolymer obtained by copolymerizing 3,4-diol-1-butene, a vinyl ester-based monomer and ethylene; a method of saponifying a copolymer obtained by copolymerizing 3,4-diacyloxy-1-butene, a vinyl ester monomer and ethylene; a method of saponifying a copolymer obtained by copolymerizing 3-acyloxy-4-ol-1-butene, a vinyl ester-based monomer and ethylene; a method of saponifying a copolymer obtained by copolymerizing 4-acyloxy-3-ol-1-butene, a vinyl ester-based monomer and ethylene; a method of saponifying a copolymer obtained by copolymerizing 3,4-diacyloxy-2-methyl-1-butene, a vinyl ester-based monomer and ethylene; a method of saponifying a copolymer obtained by copolymerizing 2,2-dialkyl-4-vinyl-1,3-dioxolane, a vinyl ester-based monomer and ethylene; and a method of saponification and decarboxylation of a copolymer obtained by copolymerizing vinylethylene carbonate, a vinyl ester-based monomer and ethylene. As the process for preparing EVOH having alkylene as a bonding chain (X), there may be mentioned a method of saponifying a copolymer obtained by copolymerizing 4,5-diol-1-pentene, 4,5-diacyloxy-1-pentene, 9,5-diol-3-methyl-1-i-pentene, 4,5-diol-3-methyl-1-pentene, 5,6-diol-1-hexene, 5,6-diacyloxy-1-hexene; a vinyl ester-based monomer; and ethylene. However, the method of saponifying a copolymer obtained by copolymerizing 3,4-diacyloxy-1-butene, a vinyl ester-based monomer and ethylene is preferable from the viewpoint that copolymerization reactivity is excellent, and as 3,4-diacyloxy-1-butene, use of 3,4-diacetoxy-1-butene is preferable. Also, a mixture of these monomers may be used. Furthermore, 3,4-diacetoxy-1-butane, 1,4-diacetoxy-1-butene, 1,4-diacetoxy-1-butane may be contained as a small amount of impurities. Moreover, such copolymerization processes will be described below but are not limited thereto.

In this connection, 3,4-diol-1-butene is represented by the following formula (2), 3,4-diacyloxy-1-butene is represented by the following formula (3), 3-acyloxy-4-ol-1-butene is represented by the following formula (4) and 4-acyloxy-3-ol-1-butene is represented by the following formula (5).

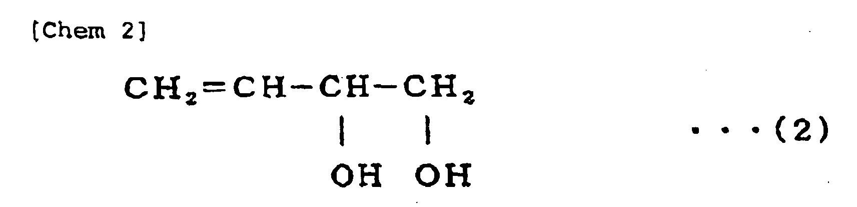

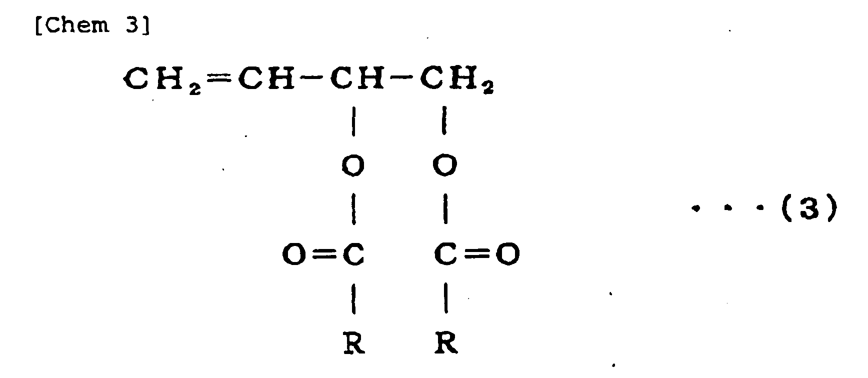

(wherein R represents an alkyl group, preferably a methyl group)

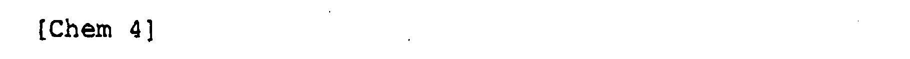

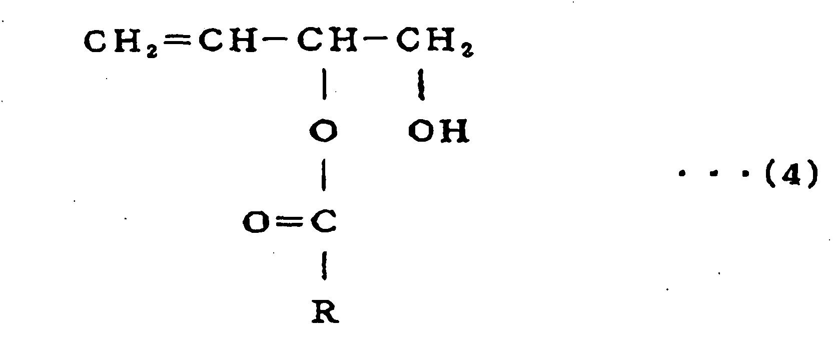

(wherein R represents an alkyl group, preferably a methyl group)

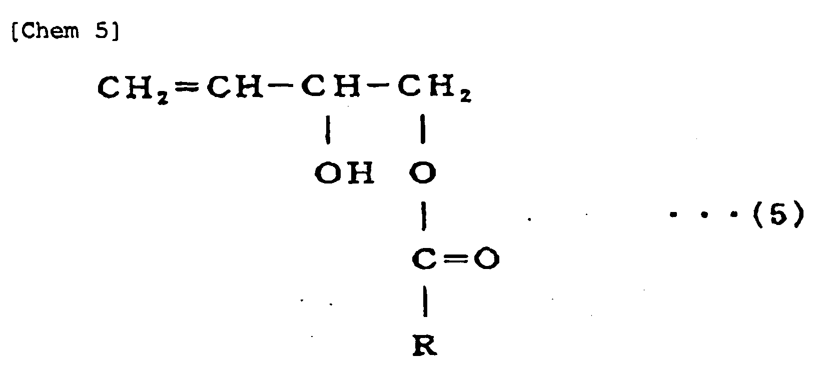

(wherein R represents an alkyl group, preferably a methyl group)
The compound indicated by the above formula (2) is available from Eastman Chemical Company and the compound indicated by the above formula (3) is commercially available as products from Eastman Chemical Company and Across Inc.

As the vinyl ester-based monomer, there may be mentioned vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate and vinyl versatate. Of these, vinyl acetate is preferably used.

The method for copolymerizing 3,4-diacyloxy-1-butene, a vinyl ester-based monomer and ethylene is not particularly limited. Known methods such as bulk polymerization, solution polymerization, suspension polymerization, dispersion polymerization or emulsion polymerization can be employed, but usually solution polymerization is conducted.

The method for adding the monomer components at copolymerization is not particularly limited and any method such as adding all at once, adding divisionally, or adding continuously is adopted.
Moreover, as the method for introducing ethylene in the copolymer, it is sufficient to conduct usual ethylene-pressurized polymerization, and the introduction amount can be regulated by the pressure of ethylene. Depending on the objective ethylene content, the amount is not categorically determined but is usually selected from a range of 25 to 80 kg/cm².

As the solvent used for such copolymerization, there may be usually mentioned lower alcohols such as methanol, ethanol, propanol and butanol, and ketones such as acetone and methyl ethyl ketone. Methanol is suitably used from an industrial point of view.
The amount of the solvent to be used may be suitably selected in consideration of a chain transfer constant of the solvent, depending on the objective degree of polymerization of the copolymer. For example, when the solvent is methanol, it is selected from the range of S (solvent)/M (monomer) = 0.01 to 10 (weight ratio), preferably 0.05 to 7 (weight ratio).

A polymerization catalyst is used for copolymerization. As such a polymerization catalyst, there may be, for example, mentioned known radical polymerization catalysts such as azobisisobutyronitrile, acetyl peroxide, benzoyl peroxide and lauryl peroxide and catalysts active at low temperature such as peroxyesters including t-butylperoxyneodecanoate, t-butylperoxypivalate, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate and t-hexyl peroxypivalate; peroxydicarbonates including di-n-propyl peroxydicarbonate, di-iso-propyl peroxydicarbonate, di-sec-butyl peroxydicarbonate, bis(4-t-butylcyclohexyl) peroxydicarbonate, di-2-ethoxyethyl peroxydicarbonate, di(2-ethylhexyl) peroxydicarbonate, dimethoxybutyl peroxydicarbonate and di(3-methyl-3-methoxybutylperoxy) dicarbonate; and diacyl peroxides including 3,3,5-trimethylhexanoyl peroxide diisobutyryl peroxide and lauroyl peroxide. The amount of the polymerization catalyst to be used depends on the type of catalyst and is not categorically determined but is arbitrarily selected according to a polymerization rate. For example, in the case that azobisisobutyronitrile or acetyl peroxide is used, the amount is preferably 10 to 2000 ppm, particularly 50 to 1000 ppm, based on the vinyl ester-based monomer.
Also, the reaction temperature of the copolymerization reaction is preferably selected from the range of 40°C to a boiling point depending on the solvent to be used and the pressure.

In the invention, a hydroxylactone-based compound or hydroxycarboxylic acid is preferably included together with the catalyst, from the viewpoint that the color tone of the obtained resin composition is satisfactory (approaching to colorless). The hydroxylactone-based compound is not particularly limited as long as it is a compound having a lactone ring and a hydroxyl group in the molecule. For example, there may be mentioned L-ascorbic acid, erythorbic acid, gluconodeltalactone and L-ascorbic acid and erythorbic acid are suitably used. Moreover, as the hydroxycarboxylic acid, there may be mentioned glycolic acid, lactic acid, glyceric acid, malic acid, tartaric acid, citric acid, salicylic acid and citric acid is suitably used.

The amount of the hydroxylactone-based compound or hydroxycarboxylic acid is preferably 0.0001 to 0.1 part by weight (more preferably 0.0005 to 0.05 part by weight, particularly 0.001 to 0.03 part by weight) based on 100 parts by weight of the vinyl ester-based monomer, in the case of both a batch type and a continuous type. When the amount is less than 0.0001 part by weight, the effects of the co-presence cannot be sufficiently obtained and to the contrary, when the amount is more than 0.1 part by weight, polymerization of the vinyl ester-based monomer is inhibited, thus the cases being not preferable. The method for adding the compound into the polymerization system is not particularly limited, but usually the compound is diluted with a solvent such as a lower aliphatic alcohol (methanol, ethanol, propanol, tert-butanol, or the like), an aliphatic ester including the vinyl ester-based monomer or water or a mixed solvent thereof and then added into the polymerization system.

In this connection, the amount of 3,4-diacyloxy-1-butene to be added may be determined depending on the desired amount of the above structural unit (1) to be introduced.

Also, in the invention, a copolymerizable ethylenically unsaturated monomer may be copolymerized at the above copolymerization within the range that the effects of the invention are not impaired. As such monomers, there may be mentioned olefins such as propylene, 1-butene and isobutene; unsaturated acids such as acrylic acid, methacrylic acid, crotonic acid, phthalic acid (anhydride), maleic acid (anhydride) and itaconic acid (anhydride) or salts thereof or mono- or di-alkyl esters having 1 to 18 carbon atoms; acrylamides such as acrylamide, N-alkylacrylamide having 1 to 18 carbon atoms, N,N-dimethylacrylamide, 2-acrylamidopropanesulfonic acid or salt thereof, acrylamidopropyldimethylamine or acid salts thereof or quaternary salts thereof; methacrylamides such as methacrylamide, N-alkylmethacrylamide having 1 to 18 carbon atoms, N,N-dimethylmethacrylamide, 2-methacrylamidopropanesulfonic acid or salts thereof, methacrylamidopropyldimethylamine, or acid salts thereof or quaternary salts thereof; N-vinylamides such as N-vinylpyrrolidone, N-vinylformamide and N-vinylacetoamide; vinyl cyanides such as acrylonitrile and methacrylonitrile; vinyl ethers such as alkyl vinyl ether having 1 to 18 carbon atoms, hydroxyalkyl vinyl ether and alkoxyalkyl vinyl ether; halogenated vinyls such as vinyl chloride, vinylidene chloride, vinyl fluoride, vinylidene fluoride and vinyl bromide; vinylsilanes; allyl acetate; allyl chloride; allyl alcohol; dimethylallyl alcohol; trimethyl-(3-acrylamide-3-dimethylpropyl)-ammonium chloride; acrylamido-2-methylpropanesulfonic acid; glycerin monoallyl ether; ethylene carbonate.

In addition, there may be also mentioned cation group-containing monomers such as N-acrylamidomethyltrimethylammonium chloride, N-acrylamidoethyltrimethylammonium chloride, N-acrylamidopropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butene-trimethylammonium chloride, dimethyldiallylammonium chloride and diethyldiallylammonium chloride, and acetoacetyl group-containing monomers.

Furthermore, as the vinylsilanes, there may be mentioned vinyltrimethoxysilane, vinylmethyldimethoxysilane, vinyldimethylmethoxysilane, vinyltriethoxysilane, vinylmethyldiethoxysilane, vinyldimethylethoxysilane, vinylisobutyldimethoxysilane, vinylethyldimethoxysilane, vinylmethoxydibutoxysilane, vinyldimethoxybutoxysilane, vinyltributoxysilane, vinylmethoxydihexyloxysilane, vinyldimethoxyhexyloxysilane, vinyltrihexyloxysilane, vinylmethoxydioctyloxysilane, vinyldimethoxyoctyloxysilane, vinyltrioctyloxysilane, vinylmethoxydilauryloxysilane, vinyldimethoxylauryloxysilane, vinylmethoxydioleyloxysilane, vinyldimethoxyoleyloxysilane.

Then, the copolymer obtained is then saponified but the saponification is carried out in a state in which the copolymer obtained in the above is dissolved in an alcohol or hydrous alcohol, using an alkali catalyst or an acid catalyst. As the alcohol, there may be mentioned methanol, ethanol, propanol, tert-butanol and the like but methanol is preferably used in particular. The concentration of the copolymer in the alcohol is suitably selected according to a viscosity of the system, but is usually selected from the range of 10 to 60% by weight. As the catalyst to be used for the saponification, there may be mentioned alkali catalysts such as hydroxides and alcoholates of alkali metals including sodium hydroxide, potassium hydroxide, sodium methylate, sodium ethylate, potassium methylate and lithium methylate; and acid catalysts such as sulfuric acid, hydrochloric acid, nitric acid, metasulfonic acid, zeolite and a cation-exchange resin.

The amount of the saponifying catalyst is suitably selected according to the saponifying method, the aimed degree of saponification, but when an alkali catalyst is used, the amount is suitably 0.001 to 0.1 equivalent and preferably 0.005 to 0.05 equivalent, based on a total amount of monomers such as the vinyl ester-based monomer and 3,4-diacyloxy-1-butene. Concerning the saponifying method, either of batch saponification, continuous saponification on a belt and column-type continuous saponification can be carried out in accordance with the aimed degree of saponification and the like, and column-type saponification under fixed pressurization is preferably used because the amount of the alkali catalyst can be reduced at the saponification and the saponification reaction easily proceeds at a high efficiency, and the like. Further, pressure at the saponification cannot be categorically said depending on the objective ethylene content, but is selected from the range of 2 to 7 kg/cm² and the temperature at that time is selected from 80 to 150°C and preferably from 100 to 130°C.

As described above, EVOH having the above structural unit (1) (structural unit having 1,2-glycol bond) is obtained. In the invention, the ethylene content and the degree of saponification of the EVOH obtained are not particularly limited, but it is preferable that the ethylene content is 10 to 60% by mol (further, 20 to 50% by mol, particularly 25 to 48% by mol) and the degree of saponification is preferably 90% by mol or more (further, 95% by mol or more). When the ethylene content is less than 10% by mol, the gas barrier property and appearance of the resulting molded articles at high humidity tend to be lowered and to the contrary, when it is more than 60% by mol, the gas barrier property of the molded articles tend to be lowered. Further, when the degree of saponification is less than 90% by mol, the gas barrier property, moisture resistance and the like of the molded articles tend to be lowered. Thus, the cases are not preferable.

Moreover, the amount of the structural unit having 1,2-glycol bond to be introduced into the EVOH is not particularly limited, but 0.1 to 50% by mol (further 0.5 to 40% by mol, particularly 1 to 30% by mol) is preferable. When the amount to be introdueced is less than 0.1% by mol, the effect of the invention is not adequately exhibited and to the contrary, when it is more than 50% by mol, the gas barrier property tends to be lowered, thus the cases being not preferable. Further, when the amount of the structural unit having 1,2-glycol bond is adjusted, it can be also adjusted by blending at least two kinds of EVOH wherein the amount to be introduced of the structural unit having 1,2-glycol bond differs. There is no problem even if at least one of them does not have the structural unit having 1,2-glycol bond.
With regard to the EVOH where the amount of 1,2-glycol bond is thus adjusted, the amount of 1,2-glycol bond may be calculated as a weight average and also the ethylene content may be calculated as a weight average but accurately, the ethylene content and the amount of 1,2-glycol bond can be calculated based on the results of ¹H-NMR measurement to be mentioned below.

Further, from the viewpoint of improving the thermal stability of the resin, it is preferable to add an acid such as acetic acid or phosphoric acid or its salt of a metal such as an alkali metal, an alkaline earth metal or a transition metal and boric acid or its metal salt as a boron compound to the EVOH used in the invention, within the range that the purpose of the present invention are not impaired.

The amount of acetic acid to be added is preferably 0.001 to 1 part by weight (further, 0.005 to 0.2 part by weight, particularly 0.010 to 0.1 part by weight) based on 100 parts by weight of the EVOH in the resin composition. When the amount to be added is less than 0.001 part by weight, the effect by comprising tends to be not obtained adequately and to the contrary, when it is more than 1 part by weight, the appearance of the resulting molded articles tends to be deteriorated, thus the cases being not preferable.

As the metal salt of boric acid, there may be mentioned calcium borate, cobalt borate, zinc borate (zinc tetraborate, zinc metaborate), potassium aluminum borate, ammonium borate (ammonium metaborate, ammonium tetraborate, ammonium pentaborate, ammonium octaborate), cadmium borate (cadmium orthoborate, cadmium tetraborate and the like), potassium borate (potassium metaborate, potassium tetraborate, potassium pentaborate, potassium hexaborate, potassium octaborate), silver borate (silver metaborate, silver tetraborate), copper borate (copper (II) borate, copper metaborate, copper tetraborate and the like), sodium borate (sodium metaborate, sodium diborate, sodium tetraborate, sodium pentaborate, sodium hexaborate, sodium octaborate), lead borate (lead metaborate, lead hexaborate), nickel borate (nickel orthoborate, nickel diborate, nickel tetraborate, nickel octaborate), barium borate (barium orthoborate, barium metaborate, barium diborate, barium tetraborate), bismuth borate, magnesium borate (magnesium orthoborate, magnesium diborate, magnesium metaborate, trimagnesium tetraborate, pentamagnesium tetraborate and the like), manganese borate (manganese (I) borate, manganese metaborate, manganese tetraborate, lithium borate (lithium metaborate, lithium tetraborate, lithium pentaborate), additionally, borate minerals such as borax, kernite, Inyoite, Kotoite, Suanite and Szaibelyite. Preferably, borax, boric acid and sodium borate (sodium metaborate, sodium diborate, sodium tetraborate, sodium pentaborate, (sodium hexaborate, sodium octaborate) are mentioned. Moreover, the amount of the boron compound to be added is preferably 0.001 to 1 part by weight (further, 0.002 to 0.2 part by weight, particularly 0.005 to 0.1 part by weight), in terms of boron, based on 100 parts by weight of the total of EVOH in the composition. When the amount to be added is less than 0.001 part by weight, the effect by comprising tends to be not obtained adequately and to the contrary, when it is more than 1 part by weight, the appearance of the resulting molded articles tends to be deteriorated, thus the cases being not preferable.

Further, as the metal salt, there may be mentioned metal salts such as sodium, potassium, calcium and magnesium salts of organic acids such as acetic acid, propionic acid, butyric acid, lauric acid, stearic acid, oleic acid and behenic acid and inorganic acids such as sulfuric acid, sulfurous acid, carbonic acid and phosphoric acid. A salt of acetic acid, a salt of phosphoric acid and a salt of hydrogen phosphoric acid are preferable. Moreover, the amount of the metal salt to be added is preferably 0.0005 to 0.1 part by weight (further, 0.001 to 0.05 part by weight, particularly 0.002 to 0.03 part by weight), in terms of metal, based on 100 parts by weight of the EVOH in the resin composition. When the amount to be added is less than 0.0005 part by weight, the effect by comprising tends to be not obtained adequately and to the contrary, when it is more than 0.1 part by weight, the appearance of the resulting molded articles tends to be deteriorated, thus the cases being not preferable.
Further, when two or more kinds of the salts of alkali metal and/or alkaline earth metal are added to EVOH, the total amount thereof preferably falls within the range of the above amount.

The method of adding acids or its metal salt to the EVOH composition is not particularly limited and includes (1) a method of bringing porous precipitates of the EVOH having a water content of 20 to 80% by weight into contact with an aqueous solution of the acids or its metal salt to incorporate the acid or its metal salt therein; (2) a method of incorporating the acids or its metal salt into a homogeneous solution (water/alcohol solution) of the EVOH, extruding the mixture in a strand shape into a coagulation solution, then cutting the obtained strand to form pellets; (3) a method of collectively mixing the EVOH with the acids or its metal salt and then melt-kneading the mixture by means of an extruder; (4) a method of collectively mixing the resin composition with the acids or its metal salt and then melt-kneading the mixture by means of an extruder or the like; (5) a method of neutralizing alkali (sodium hydroxide, potassium hydroxide) used in the saponifying step with acids such as acetic acid at the production of the EVOH and adjusting the amount of remaining acid such as acetic acid and an alkali metal salt such as sodium acetate or potassium acetate that is formed as a by-product, by a treatment of water rinsing; and the like. In order to more remarkably obtain the effect of the invention, the methods of (1), (2) and (5) that are superior in dispersibility of the acids or its metal salt are preferable.

The EVOH composition obtained by the above method of (1), (2) or (5) is then dried.
As the drying method, various drying methods can be adopted. For example, there are mentioned fluidized drying by which the substantially pellet form resin composition is stirred and dispersed mechanically or with hot wind; and static drying by which the substantially pellet form resin composition is performed without providing dynamic action such as stirring and dispersion. A drier for carrying out the fluidized drying includes a columnar groove type stirring drier, a column tube drier, a rotary drier, a fluidized bed drier, a vibration fluidized bed drier, a cone rotary drier and the like. Further, a drier for carrying out the static drying includes a batch type box drier as material static type, a band drier, a tunnel drier and a vertical drier as a material transfer type. The fluidized drying and the static drying can be carried out in combination.

Air or inert gas (nitrogen gas, helium gas, argon gas) is used as heating gas used at the drying treatment. The temperature of the heating gas is preferably 40 to 150°C from the viewpoints of productivity and the prevention of thermal degradation of the resin composition. Usually, the time for the drying treatment is preferably 15 minutes to 72 hours depending on the water content of the resin composition and the treating amount thereof from the viewpoints of productivity and the prevention of thermal degradation of the resin composition.

The above EVOH composition may comprise a little amount of residual monomers (3,4-diol-1-butene, 3,4-diacyloxy-1-butene, 3-acyloxy-4-ol-1-butene, 4-acyloxy-3-ol-1-butene, 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene, 4,5-diacyloxy-2-methyl-1-butene) and the saponified product of the monomers (3,4-diol-1-butene, 4,5-diol-1-pentene, 4,5-diol-3-methyl-1-pentene, 4,5-diol-3-methyl-1-pentene, 5,6-diol-1-hexene, within the range that the purpose of the invention is not inhibited.

Further, it is also preferable that the EVOH to be used in the invention is a blend of EVOH comprising the structural unit (1) and the other EVOH different from this EVOH from the viewpoint that the gas barrier property and pressure resistance are improved. As such other EVOH, EVOH different in structural unit, EVOH different in ethylene content, EVOH different in degree of saponification, EVOH different in molecular weight, may be mentioned.
As the EVOH different in structural unit from the EVOH comprising the structural unit (1), there may be, for example, mentioned EVOH consisting of an ethylene structural unit and a vinyl alcohol structural unit and modified EVOH having a functional group such as 2-hydroxyethoxy group in a side chain may be mentioned.
Moreover, in the case that EVOH different in ethylene content is used, the structural unit may be the same or different but the difference of the ethylene content is preferably 1% by mol or more (further 2% by mol or more, particularly 2 to 20% by mol). When the difference of the ethylene content is too large, the transparency becomes bad in some cases, thus the case being not preferable. Moreover, the method of producing two or more different kinds of EVOH (a blend) is not particularly limited and there may be, for example, mentioned a method of mixing respective paste of EVA before saponification and then saponifying the mixture, a method of mixing a solution of respective EVOH after saponification dissolved in an alcohol or a mixed solvent of water and alcohol, a method of mixing respective EVOH in a pellet form or in a powder form and then melt-kneading the mixture.

A melt flow rate (MFR) (210°C, a load of 2160 g) of the EVOH composition thus obtained is not particularly limited, but is preferably 0.1 to 100 g/10 minutes (further 0.5 to 50 g/10 minutes, particularly 1 to 30 g/10 minutes). When the melt flow rate is less than the range, an inside of an extruder becomes a high torque state at molding and extrusion molding tends to be difficult. Further, when it is larger than the range, the appearance and the gas barrier property at the thermal stretching molding tend to be lowered. Thus, the cases are not preferable.

The resin composition may be mixed with a lubricant such as saturated aliphatic amide (for example, stearic acid amide), unsaturated fatty acid amide (for example, oleic amide), bis-fatty acid amide (for example, ethylene bis(stearic acid amide)), a metal salt of fatty acid (for example, calcium stearate, magnesium stearate) or low-molecular-weight polyolefin (for example, low molecular weight polyethylene with a molecular weight of 500 to 10,000, low molecular weight polypropylene); an inorganic salt (for example, hydrotalcite); a plasticizer (for example, aliphatic polyhydric alcohol such as ethylene glycol, glycerin or hexanediol); an oxygen absorbent (for example, as an inorganic-type oxygen absorbent, a reduced iron powder, one in which a water-absorbing substance, an electrolyte and the like are added thereto, an aluminum powder, potassium sulfite, photocatalyst titanium oxide; as an organic compound-type oxygen absorbent, ascorbic acid, a fatty acid ester thereof, a metal salt thereof, polyhydric phenol such as hydroquinone, gallic acid or a hydroxyl group-containing phenol aldehyde resin, a coordinate complex of a nitrogen-containing compound with a transition metal such as bis-salicylaldehyde-imine cobalt, tetraethylenepentamine cobalt, a cobalt-Schiff base complex, porphyrins, a macrocyclic polyamine complex and a polyethyleneimine-cobalt complex, a terpene compound, a reaction product of amino acids with a hydroxyl group-containing reductive substance and a triphenylmethyl compound; as a polymer-type oxygen absorbent, a coordinate complex of a nitrogen-containing resin with a transition metal (example: a combination of MXD Nylon with cobalt), a blend of a tertiary hydrogen-containing resin with a transition metal (example: a combination of polypropylene with cobalt), a blend of a carbon-carbon unsaturated bond-containing resin with a transition metal (example: a combination of polybutadiene with cobalt), a photooxidation degradative resin (example: polyketone), an anthraquinone polymer (example: polyvinylanthraquinone) or the like, and those in which a photoinitiator (benzophenone), a peroxide-trapping agent (a commercially available antioxidant) or a deodorant (active carbon) are added to the blend; a thermal stabilizer; a photo stabilizer; an antioxidant; an ultraviolet absorbent; a coloring agent; an antistatic agent; a surfactant; an antibiotics; an anti-blocking agent; a slipping agent; a filler (for example, an inorganic filler); within the range that the purpose of the invention is not inhibited.

Further, the thermoplastic resin (B) to be used in the invention is selected from polyolefin and polystyrene. The polyolefin is not particularly limited but is selected from linear low density polyethylene, low density polyethylene, ultra-low density polyethylene, middle density polyethylene, high density polyethylene, an ethylene-vinyl acetate copolymer, an ionomer, an ethylene-propylene (block and random) copolymer, an ethylene-acrylic acid copolymer, an ethylene-acrylate ester copolymer, polypropylene, a propylene-α-olefin (α-olefin having 4 to 20 carbon atoms) copolymer, polybutene, polypentene.

The resin composition of the invention comprises the above EVOH (A) and the thermoplastic resin (B) and particularly, is preferably a recycled material of a multi-layer structure comprising such EVOH (A) and thermoplastic resin (B). As such a multi-layer structure, there may be, for example, mentioned a multi-layer structure having a layer comprising the EVOH (A) and a layer comprising the thermoplastic resin (B) but it is not limited thereto.
In this connection, the recycled material is usually used after pulverization but may be re-pelletized by melt-mixing. At that time, in order to adjust a content ratio of the EVOH (A) to the thermoplastic resin (B), an unused EVOH (A) or thermoplastic resin (B) may be added.

The content ratio by weight of the EVOH composition (A) to the thermoplastic resin (B) is 0.1/99.9 to 20/80. When the weight ratio is less than 0.1/99.9, the recycled material cannot be efficiently used as the recycled layer and to the contrary, when the ratio is more than 20/80, the appearance of the multi-layer is lowered, thus the cases being not preferable.

Further, an adhesive resin (C) may be contained in the resin composition of the invention. The adhesive resin is not particularly limited but a modified olefin-based polymer comprising a carboxyl group obtained by chemically bonding by addition reaction, graft reaction or the like can be mentioned. Specifically, there may be preferably mentioned a mixture of one or two or more of polymers selected from maleic anhydride graft modified polyethylene, maleic anhydride graft modified polypropylene, maleic anhydride graft modified ethylene-propylene (block or random) copolymer, maleic anhydride graft modified ethylene-ethyl acrylate copolymer, maleic anhydride graft modified ethylene-vinyl acetate copolymer. The amount of the unsaturated carboxylic acid or its anhydride contained in the thermoplastic resin is preferably 0.001 to 3% by weight, more preferably 0.01 to 1% by weight and particularly preferably 0.03 to 0.5% by weight.
The content of such an adhesive resin (C) is preferably 0.5 to 30% by weight, further preferably 1 to 20% by weight, and particularly preferably 2 to 10% by weight. When the content is less than 0.5% by weight, the transparency of the resin composition layer tends to decrease, thus the case being not preferable. When the content is more than 30% by weight, thermal resistance of the resin composition decreases, thus the case being not preferable.

Thus, the resin composition of the invention is obtained and the resin composition is useful for molded articles and in particular, is useful for melt molding. The following will describe the melt molding.
As the molded articles, there may be mentioned multi-layer (laminated layer) films and sheets, containers, tubes and the like. As the lamination method at the lamination with other substrate, there may be mentioned a method of laminating other substrate through melt-extrusion on the film, sheet and the like of the resin composition of the invention; to the contrary, a method of laminating the resin through melt-extrusion on other substrate; a method of co-extruding the resin and other substrate; a method of dry-laminating the resin (layer) and other substrate (layer) using a known adhesive such as an organotitanium compound, an isocyanate compound, a polyester-based compound or a polyurethane compound. Among these, the method of co-extrusion is preferable because a multi-layer structure (laminate) can be conveniently produced.

As the co-extrusion method, specifically, a known method such as a multi manifold die method, a feed block method, a multi slot die method or a die external adhesion method can be adopted. As the shape of dice, a T-dice and a round dice can be used and the melt molding temperature at the melt extrusion is preferably 150 to 300°C.

As such other substrate, a thermoplastic resin selected from polyolefin or polystyrene is useful and as the polyolefin, aforementioned polyolefin is used.

As layer constitutions of specific laminates, there may be mentioned a thermoplastic resin (b) layer/a resin composition layer of the invention/an adhesive resin (c) layer/an EVOH composition (a) layer, a thermoplastic resin (b) layer/a resin composition layer of the invention/an adhesive resin (c) layer/an EVOH composition (a) layer/an adhesive resin (c) layer/a thermoplastic resin (b) layer, a thermoplastic resin (b) layer/a resin composition layer of the invention/an adhesive resin (c) layer/an EVOH composition (a) layer/an adhesive resin (c) layer/ a resin composition layer of the invention/a thermoplastic resin (b) layer, and further, a resin composition layer of the invention/an adhesive resin (c) layer/an EVOH composition (a) layer, a resin composition layer of the invention/an adhesive resin (c) layer/an EVOH composition (a) layer/an adhesive resin (c) layer/an EVOH composition (a) layer, a resin composition layer of the invention/an adhesive resin (c) layer/an EVOH composition (a) layer/an adhesive resin (c) layer/a thermoplastic resin (b) layer, a resin composition layer of the invention/an adhesive resin (c) layer/an EVOH composition (a) layer/a resin composition layer of the invention/a thermoplastic resin (b) layer.
Moreover, the adhesive resin (c) layer herein is a layer in which the aforementioned adhesive layer is used and the resin composition of the invention is preferably a recycled material thereof.

The thickness of the respective layers of the laminate is not categorically mentioned depending on the layer composition, the kind of the thermoplastic resin (b), uses, packaging mode, physical properties required and the like, but the EVOH composition (a) layer is usually selected from the range of 2 to 500 µm (further, 3 to 200 µm), the thermoplastic resin (b) layer is selected from the range of 10 to 5000 µm (further, 30 to 1000 µm), the adhesive resin (c) layer is selected from the range of 1 to 400 µm (further, 2 to 150 µm), and the resin composition layer of the invention is selected from the range of about 10 to 5000 µm (further, 30 to 1000 µm).
The thickness of the resin composition layer of the invention is preferably 1 or 2 times that of the EVOH composition (a) layer.

Further, the resin composition layer of the invention or the thermoplastic resin layer may comprise an antioxidant, an antistatic agent, a lubricant, a nuclear material, an antiblocking agent, an ultraviolet absorbent, wax or the like, which is hitherto known.

The thus obtained multi-layer structure is useful for various containers for general foods as well as seasonings such as mayonnaise and dressing, fermented foods such as soybean paste (miso), oil or fat foods such as salad oil, drinks, cosmetics, pharmaceuticals, detergents, perfumes, and the like.

### Examples

Hereinafter, the present invention is specifically described with reference to Examples. In the following, "%" is represented on a weight basis unless otherwise indicated.

### Polymerization Example 1

An EVOH composition (A1) was obtained by the following method.
Into a 1 m³ polymerization reactor having a cooling coil, 500 kg of vinyl acetate, 35 kg of methanol, 500 ppm (based on vinyl acetate) of acetyl peroxide, 20 ppm of citric acid and 14 kg of 3,4-diacetoxy-1-butene were added. After the system was replaced once with nitrogen gas, the system was replaced with ethylene and ethylene was introduced under pressure to achieve an ethylene pressure of 45 kg/cm². After stirring, temperature was raised to 67°C and polymerization was carried out for 6 hours until polymerization rate reached 50% while adding 3,4-diacetoxy-1-butene at a rate of 15 g/min in a total amount of 4.5 kg. Then, the polymerization reaction was stopped to obtain an ethylene-vinyl acetate copolymer having an ethylene content of 38% by mol.

A methanol solution of the ethylene-vinyl acetate copolymer was fed at a speed of 10 kg/hr from the tower top portion of a shelf stage tower (saponifying tower) and a methanol solution comprising 0.012 equivalent of sodium hydroxide based on the remaining acetic acid group in the copolymer was simultaneously fed from the tower top portion. On the other hand, methanol was fed at 15 kg/hr from the tower lower portion. Temperature in the tower was 100 to 110°C and the pressure of the tower was 3 kg/cm²G.
A methanol solution (30% of EVOH and 70% of methanol) of EVOH comprising a structural unit having 1,2-glycol bond was taken out from 30 minutes after the start of the adding. The degree of saponification of a vinyl acetate component of the EVOH was 99.5% by mol.

Then, the obtained methanol solution of the EVOH was fed at 10 kg/hr from the tower top portion of a methanol/aqueous solution preparation tower, methanol vapor at 120°C and water vapor were respectively added at 4 kg/hr and 2.5 kg/hr from the tower lower portion, methanol was distilled off at 8 kg/hr from the tower top portion, and 6 equivalents of methyl acetate based on the amount of sodium hydroxide used in the saponification was simultaneously added from the tower middle portion of the tower at an inner tower temperature of 95 to 110°C to obtain a water/alcohol solution of EVOH (a resin concentration of 35%) from the tower bottom portion.

The obtained water/alcohol solution of the EVOH was extruded in a strand shape from a nozzle having a hole diameter of 4 mm into a coagulation solution vessel kept at 5°C that comprises 5% of methanol and 95% of water and the strand shape article was cut with a cutter after completion of the coagulation to obtain porous pellets of EVOH having a diameter of 3.8 mm, a length of 4 mm and a water content of 45%.
After the porous pellets were rinsed with water so that 100 parts of water was used based on 100 parts of the porous pellets, they were added into a mix solution comprising 0.032% of boric acid and 0.007% of calcium dihydrogen phosphate and the mixture was stirred at 30°C for 5 hours and dried to obtain an EVOH composition (A1). The pellets contained boric acid and calcium dihydrogen phosphate in an amount of 0.015 part by weight (in terms of boron) and 0.005 part by weight (in terms of phosphate radical) respectively based on 100 parts by weight of EVOH. The MFR was 4.0 g/10 min.

Further, when the amount of 1,2-glycol bond introduced therein was calculated after the ethylene-vinyl acetate copolymer before saponification was measured on ¹H-NMR (internal standard substance: tetramethylsilane, solvent: d6-DMSO), the amount was 2.5% by mol. On this occasion, "AVANCE DPX400" manufactured by Bruker Japan Co., Ltd. was used for NMR measurement.

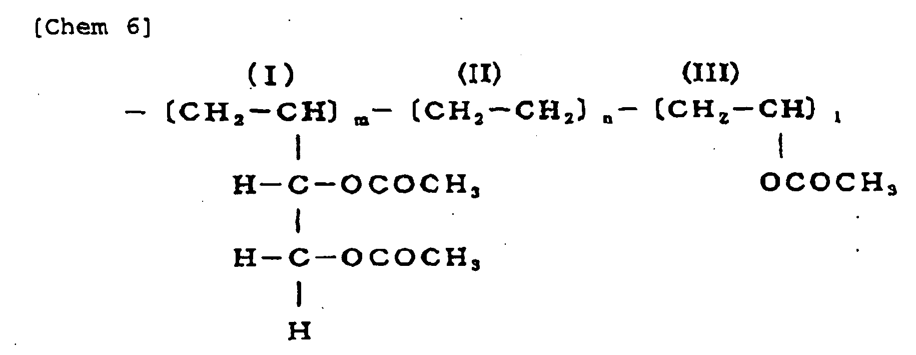

[¹H-NMR] (see FIG. 1)
1.0 to 1.8 ppm: Methylene proton (integration value a in FIG. 1)
1.87 to 2.06 ppm: Methyl proton
3.95 to 4.3 ppm: Proton at methylene side of structure (I) + proton of unreacted 3,4-diacetoxy-1-butene (integration value b in FIG. 1)
4.6 to 5.1 ppm: Methine proton + proton at methine side of structure (I) (integration value c in FIG. 1)
5.2 to 5.9 ppm; Proton of unreacted 3,4-diacetoxy-1-butene (integration value d in FIG. 1)

### [Calculation Method]

Since 4 protons exist at 5.2 to 5.9 ppm, the integration value of one proton is d/4. Since the integration value b is an integration value in which the protons of the diol and the monomer are included, the integration value (A) of one proton of the diol is A=(b-d/2)/2. Since the integration value c is an integration value in which the protons of the vinyl acetate side and the diol side are included, the integration value (B) of one proton of vinyl acetate is B=1-(b-d/2)/2. Since the integration value a is an integration value in which ethylene and methylene are included, the integration value (C) of one proton of ethylene is calculated as C=(a-2×A-2×B)/4=(a-2)/4. The amount of the structural unit (1) introduced was calculated from 100×(A/(A+B+C))=100×(2×b-d)/(a+2).

Further, FIG. 2 shows the result in which ¹H-NMR measurement was also carried out similarly with respect to EVOH after saponification. Since a peak corresponding to methyl proton at 1.87 to 2.06 ppm is greatly decreased, it is obvious that 3,4-diacetoxy-1-butene copolymerized is also saponified and converted to 1,2-glycol structure.

### Polymerization Example 2

An EVOH composition (A2) was obtained by the following method.
The amount of methanol added was changed to 20 kg and boric acid was not added in Polymerization Example 1 to obtain an EVOH composition wherein the EVOH composition has an ethylene content of 38% by mol and an amount of a structural unit having 1,2-glycol bond to be introduced of 2.5% by mol, 0.005 part by weight (in terms of phosphate radical) of calcium dihydrogen phosphate was contained based on 100 parts by weight of EVOH and MFR after drying was 4.8 g/10 min.

### Polymerization Example 3

An EVOH composition (A3) was obtained by the following method.
Similar operations were conducted except that a mixture of 3,4-diacetoxy-1-butene, 3-acetoxy-4-ol-1-butene, and 1,4-diacetoxy-1-butene in a ratio of 70:20:10 was used in place of 3,4-diacetoxy-1-butene in Polymerization Example 1 to obtain an EVOH composition having an amount of a structural unit having 1,2-glycol bond to be introduced of 2.0% by mol and an ethylene content of 38% by mol, wherein the content of boric acid was 0.015 part by weight (in terms of boron), 0.005 part by weight (in terms of phosphate radical) of calcium dihydrogen phosphate based on 100 parts by weight of the EVOH was contained and MFR after drying was 3.7 g/10 min.

Separately, there was prepared an EVOH composition (A4) having no structural unit (1), an ethylene content of 38% by mol, a degree of saponification of 99.5% by mol and MFR of 3.5 g/10 min (210°, 2160 g), wherein the content of boric acid was 0.015 part by weight (in terms of boron) and 0.005 part by weight (in terms of phosphate radical) of calcium dihydrogen phosphate based on 100 parts by weight of the EVOH.

### Example 1

The EVOH composition (A1), "Novatec LD ZE41" (MFR=0.5, density=0.922) manufactured by Japan Polyethylene Corporation as a thermoplastic resin (B) and "Modic-AP M533" (MFR=2.5, density=0.92) manufactured by Mitsuibishi Chemical Corporation as an adhesive resin (C) were used and fed into a co-extrusion multi-layer direct-blow molding machine to obtain a bottle (multi-layer hollow container: inner volume of about 500 cc, body diameter of 80 mm, height of 165 mm) having a layer thickness of the thermoplastic resin (B)/the adhesive resin (C)/the EVOH composition (A1)/the adhesive resin (C)/the thermoplastic resin (B)/the thermoplastic resin (B), from the inner side, = 30/10/10/10/150/50 µm. After the resulting bottle was pulverized, the same amount of the thermoplastic resin (B) was added and the whole was fed into a 30 mmφ twin-screw extruder (L/D=42), melt-kneaded at 210°C, and re-pelletized to obtain a resin composition of the invention. The weight ratio of the EVOH composition (A1) and the thermoplastic resin (B) in the resin composition was 2.5/97.5. Moreover, the content of the adhesive resin (C) was 3.8%.

### (Evaluation of burned deposit)

Using the resin composition obtained, 1000 bottles of a multi-layer bottle of the thermoplastic resin (B)/the adhesive resin (C)/the EVOH composition (A1)/the adhesive resin (C)/the resin composition/the thermoplastic resin (B) = 30/10/10/10/150/50 µm were produced by means of the above co-extrusion multi-layer direct-blow molding machine and the number of bottles in which burned deposit was incorporated among the 1000 bottles was evaluated.

### (Recycle evaluation; buildup weight, appearance)

The following recycle test was performed on the resin composition obtained and the buildup weight generated from the nozzle of a strand dice and the appearance of a monolayer film were evaluated in the following manner.
Into a single-screw extruder having 40 mmφ, L/D=28, and a screw compression ratio of 3.4, 15 kg of the resin composition was fed, a melt resin was extruded in a strand form from a strand dice having four holes of 3.5 mmφ at a set temperature: C1/C2/C3/C4/H/D = 180/215/215/215/215/215°C, a screw rotation number of 40 rpm and an ejection amount of 15 kg/hour, and the strand was air-cooled and cut by means of a pelletizer to effect re-pelletization. On this occasion, 1.5 kg of the initial resin at the start of the ejection was removed as purging. Further, the resulting first recycled pellets were fed into the same extruder and pelletized under the same conditions to obtain second recycled pellets. Further, when recycling was repeated five times, all buildup generated from the nozzle of the strand dice was collected and weighed (buildup weight).
Moreover, the resin composition recycled five times was formed into a monolayer film having a thickness of 60 µm by means of a single-screw extruder and a monolayer coat hanger dice and the appearance was evaluated as follows (appearance).
A ... No incorporation of gel and burned deposit occurs and transparency of film is also high.
B ... Transparency of film is low but no incorporation of gel and burned deposit occurs.
C ... Incorporation of gel and burned deposit occurs and film is not transparent.

### Example 2

A resin composition was produced in the same manner as in Example 1 except that the EVOH composition (A2) was used in place of the EVOH composition (A1).

### Example 3

A resin composition was produced in the same manner as in Example 1 except that the EVOH composition (A3) was used in place of the EVOH composition (A1).

### Comparative Example 1

A resin composition was produced in the same manner as in Example 1 except that the EVOH composition (A4) was used in place of the EVOH composition (A1).

The evaluation results in Examples and Comparative Examples are summarized in Table 1.

**[Table 1]**

| | Evaluation of burned deposit | Buildup weight | Appearance |
|---|---|---|---|
| Example 1 | 0 | 15 mg | A |
| Example 2 | 0 | 35 mg | A |
| Example 3 | 0 | 20 mg | A |
| Comparative Example 1 | 3 | 420 mg | C |

### Industrial Applicability

In the resin composition of the invention, as a recycled material, an occurrence of burned deposit or buildup which is a problem peculiar to a recycled layer is suppressed without a specific additive. A multi-layer structure using the same in which burned deposit or the like is not incorprated has good appearance and is useful for various packaging materials such as a food packaging material, a pharmaceutical packaging material, an industrial chemical packaging material and an agricultural chemical packaging material.

## Claims

1. A resin composition comprising an ethylene-vinyl alcohol copolymer (A) comprising the following structural unit (1) and at least one thermoplastic resin (B) selected from the group consisting of polyolefin and polystyrene: 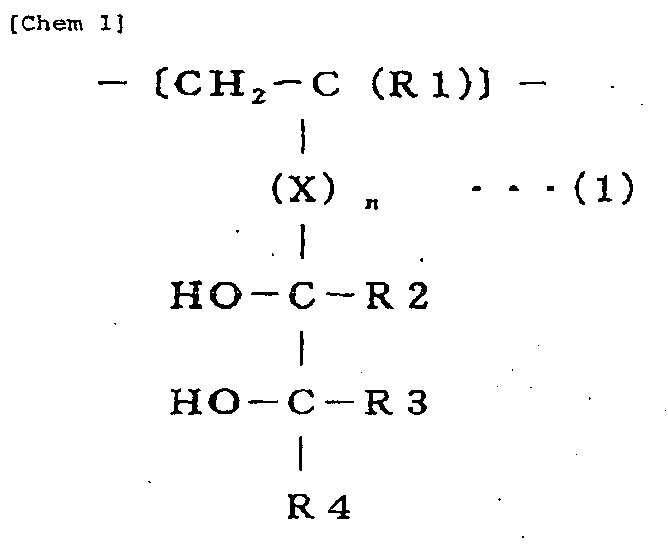 wherein X represents a bonding chain which is an arbitrary bonding chain excluding an ether bond, R1 to R4 each independently represents an arbitrary substituent, and n represents 0 or 1,
wherein a content ratio by weight of the ethylene-vinyl alcohol copolymer (A) comprising the structural unit (1) to the thermoplastic resin (B) is 0.1/99.9 to 20/80.

2. The resin composition according to claim 1, which further comprises an adhesive resin (C).

3. The resin composition according to claim 2, wherein the adhesive resin (C) is a carboxyl group-containing modified polyolefin-based resin.

4. The resin composition according to any one of claims 1 to 3, wherein each of R1 to R4 in the structural unit (1) is independently any one of a hydrogen atom, a hydrocarbon group having 1 to 8 carbon atoms, a cyclic hydrocarbon group having 3 to 8 carbon atoms, or an aromatic hydrocarbon group.

5. The resin composition according to any one of claims 1 to 4, wherein all of R1 to R4 in the structural unit (1) are a hydrogen atom.

6. The resin composition according to any one of claims 1 to 5, wherein X in the structural unit (1) is an alkylene having 6 or less carbon atoms.

7. The resin composition according to any one of claims 1 to 5, wherein n in the structural unit (1) is 0.

8. The resin composition according to any one of claims 1 to 7, wherein the structural unit (1) is introduced into a molecular chain of the ethylene-vinyl alcohol copolymer (A) by copolymerization.

9. The resin composition according to any one of claims 1 to 8, wherein the structural unit (1) is contained in an amount of 0.1 to 30% by mol in a molecular chain of the ethylene-vinyl alcohol copolymer (A).

10. The resin composition according to any one of claims 1 to 9, wherein the ethylene-vinyl alcohol copolymer (A) is obtained by saponifying a copolymer of 3,4-diacyloxy-1-butene, a vinyl ester-based monomer, and ethylene.

11. The resin composition according to any one of claims 1 to 10, wherein the ethylene-vinyl alcohol copolymer (A) is obtained by saponifying a copolymer of 3,4-diacetoxy-1-butene, a vinyl ester-based monomer, and ethylene.

12. The resin composition according to any one of claims 1 to 11, wherein the ethylene-vinyl alcohol copolymer (A) comprises a boron compound in an amount of 0.001 to 1 part by weight, in terms of boron, based on 100 parts by weight of the ethylene-vinyl alcohol copolymer.

13. The resin composition according to any one of claims 1 to 12, which comprises a recycled material of a multi-layer structure comprising the ethylene-vinyl alcohol copolymer (A) comprising the structural unit (1).

14. A multi-layer structure comprising at least one layer comprising the resin composition according to any one of claims 1 to 13.

15. A multi-layer structure, which is obtained by laminating a layer comprising the resin composition according to any one of claims 1 to 13 on at least one side of a layer comprising an ethylene-vinyl alcohol copolymer.

## Patentansprüche

1. Harzzusammensetzung, umfassend ein Ethylenvinylalkohol-Copolymer (A), das die die folgende Struktureinheit (1) und wenigstens ein thermoplastisches Harz (B) umfasst, ausgewählt aus der Gruppe, bestehend aus Polyolefin und Polystyrol: 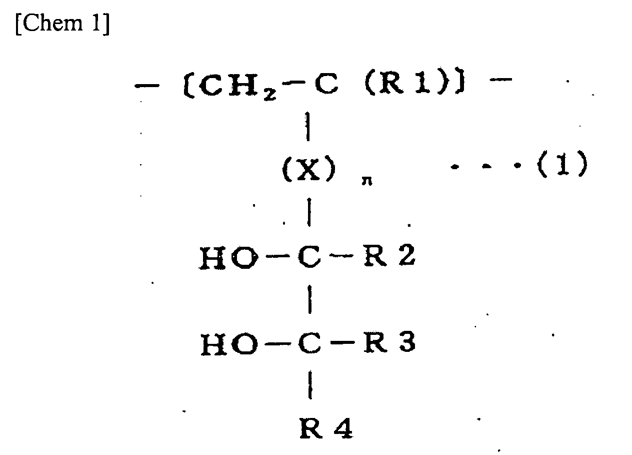 wobei X eine Bindungskette wiedergibt, die eine beliebige Bindungskette ausschließlich einer Etherbindung ist, R₁ bis R₄ jeweils unabhängig einen beliebigen Substituenten wiedergeben und n 0 oder 1 wiedergibt,
wobei das Gewichtsverhältnis des Gehalts des die Struktureinheit (1) umfassenden Ethylenvinylalkohol-Copolymers (A) zu dem thermoplastischen Harz (B) 0,1:99,9 bis 20:80 beträgt.

2. Harzzusammensetzung nach Anspruch 1, welche ferner ein Klebeharz (C) umfasst.

3. Harzzusammensetzung nach Anspruch 2, wobei das Klebeharz (C) ein Carboxylgruppen-haltiges modifiziertes Harz auf Basis von Polyolefin ist.

4. Harzzusammensetzung nach einem der Ansprüche 1 bis 3, wobei jeder R₁ bis R₄ in der Struktureinheit (1) unabhängig beliebig ein Wasserstoffatom, eine Kohlenwasserstoffgruppe mit 1 bis 8 Kohlenstoffatomen, eine zyklische Kohlenwasserstoffgruppe mit 3 bis 8 Kohlenstoffatomen oder eine aromatische Kohlenwasserstoffgruppe ist.

5. Harzzusammensetzung nach einem der Ansprüche 1 bis 4, wobei alle R₁ bis R₄ in der Struktureinheit (1) ein Wasserstoffatom sind.

6. Harzzusammensetzung nach einem der Ansprüche 1 bis 5, wobei X in der Struktureinheit (1) ein Alkylen mit 6 oder weniger Kohlenstoffatomen ist.

7. Harzzusammensetzung nach einem der Ansprüche 1 bis 5, wobei n in der Struktureinheit (1) 0 ist.

8. Harzzusammensetzung nach einem der Ansprüche 1 bis 7, wobei die Struktureinheit (1) durch Copolymerisation in die Molekülkette des Ethylenvinylalkohol-Copolymers (A) eingeführt wird.

9. Harzzusammensetzung nach einem der Ansprüche 1 bis 8, wobei die Struktureinheit (1) in einer Menge von 0,1 bis 30 Molprozent in der Molekülkette des Ethylenvinylalkohol-Copolymers (A) enthalten ist.

10. Harzzusammensetzung nach einem der Ansprüche 1 bis 9, wobei das Ethylenvinylalkohol-Copolymer (A) durch Verseifen eines Copolymers von 3,4-Diacyloxy-1-Buten, eines Monomers auf Basis von Vinylester und Ethylen erhalten wird.

11. Harzzusammensetzung nach einem der Ansprüche 1 bis 10, wobei das Ethylenvinylalkohol-Copolymer (A) durch Verseifen eines Copolymers von 3,4-Diacetoxy-1-Buten, eines Monomers auf Basis von Vinylester und Ethylen erhalten wird.

12. Harzzusammensetzung nach einem der Ansprüche 1 bis 11, wobei das Ethylenvinylalkohol-Copolymer (A) eine Borverbindung in einer Menge von 0,001 bis 1 Gewichtsanteilen, in Form von Bor, basierend auf 100 Gewichtsanteilen des Ethylenvinylalkohol-Copolymers umfasst.

13. Harzzusammensetzung nach einem der Ansprüche 1 bis 12, welches ein wieder verwertetes Material einer mehrschichtigen Struktur umfasst, die das die Struktureinheit (1) umfassende Ethylenvinylalkohol-Copolymer (A) umfasst.

14. Mehrschichtige Struktur, umfassend wenigstens eine Schicht, die die Harzzusammensetzung nach einem der Ansprüche 1 bis 13 umfasst.

15. Mehrschichtige Struktur, die durch Laminieren einer Schicht, die die Harzzusammensetzung nach einem der Ansprüche 1 bis 13 umfasst, auf wenigstens eine Seite einer das Ethylenvinylalkohol-Copolymer umfassenden Schicht erhalten wird.

## Revendications

1. Composition de résine comprenant un copolymère d'éthylène-alcool vinylique (A) comprenant l'unité structurelle (1) suivante et au moins une résine thermoplastique (B) choisie dans le groupe constitué de polyoléfines et de polystyrène : 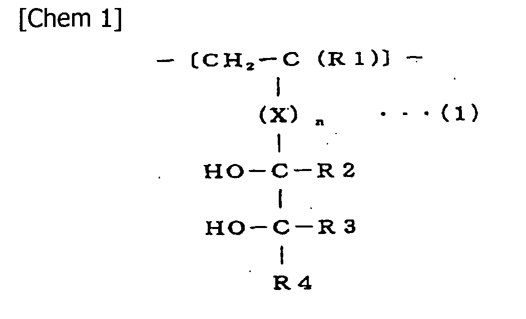 dans laquelle X représente une chaîne de liaison qui est une chaîne de liaison arbitraire excluant une liaison éther, R¹ à R⁴ représentent chacun indépendamment un substituant arbitraire, et n représente 0 ou 1,
dans laquelle un rapport de teneur en poids du copolymère d'éthylène-alcool vinylique (A) comprenant l'unité structurelle (1) à la résine thermoplastique (B) est de 0,1/99,9 à 20/80.

2. Composition de résine selon la revendication 1, laquelle comprend en plus une résine adhésive (C).

3. Composition de résine selon la revendication 2, dans laquelle la résine adhésive (C) est une résine à base de polyoléfine modifiée contenant un groupe carboxyle.

4. Composition de résine selon l'une quelconque des revendications 1 à 3, dans laquelle chacun de R¹ à R⁴ dans l'unité structurelle (1) est indépendamment l'un quelconque parmi un atome d'hydrogène, un groupe hydrocarboné ayant de 1 à 8 atomes de carbone, un groupe hydrocarboné cyclique ayant de 3 à 8 atomes de carbone ou un groupe hydrocarboné aromatique.

5. Composition de résine selon l'une quelconque des revendications 1 à 4, dans laquelle tous les R¹ à R⁴ dans l'unité structurelle (1) sont un atome d'hydrogène.

6. Composition de résine selon l'une quelconque des revendications 1 à 5, dans laquelle X dans l'unité structurelle (1) est un groupe alkylène ayant 6 atomes de carbone ou moins.

7. Composition de résine selon l'une quelconque des revendications 1 à 5, dans laquelle n dans l'unité structurelle (1) est égal à 0.

8. Composition de résine selon l'une quelconque des revendications 1 à 7, dans laquelle l'unité structurelle (1) est introduite dans une chaîne moléculaire du copolymère d'éthylène-alcool vinylique (A) par copolymérisation.

9. Composition de résine selon l'une quelconque des revendications 1 à 8, dans laquelle l'unité structurelle (1) est contenue dans une quantité de 0,1 à 30 % en mol dans une chaîne moléculaire du copolymère d'éthylène-alcool vinylique (A).

10. Composition de résine selon l'une quelconque des revendications 1 à 9, dans laquelle le copolymère d'éthylène-alcool vinylique (A) est obtenu par saponification d'un copolymère de 3,4-diacyloxy-1-butène, d'un monomère à base d'ester vinylique et d'éthylène.

11. Composition de résine selon l'une quelconque des revendications 1 à 10, dans laquelle le copolymère d'éthylène-alcool vinylique (A) est obtenu par saponification d'un copolymère de 3,4-diacétoxy-1-butène, d'un monomère à base d'ester vinylique et d'éthylène.

12. Composition de résine selon l'une quelconque des revendications 1 à 11, dans laquelle le copolymère d'éthylène-alcool vinylique (A) comprend un composé du bore dans une quantité de 0,001 à 1 partie en poids, en termes de bore, rapporté à 100 parties en poids du copolymère d'éthylène-alcool vinylique.

13. Composition de résine selon l'une quelconque des revendications 1 à 12, laquelle comprend un matériau recyclé d'une structure multicouche comprenant le copolymère d'éthylène-alcool vinylique (A) comprenant l'unité structurelle (1).

14. Structure multicouche comprenant au moins une couche comprenant la composition de résine selon l'une quelconque des revendications 1 à 13.

15. Structure multicouche, laquelle est obtenue par stratification d'une couche comprenant la composition de résine selon l'une quelconque des revendications 1 à 13 sur au moins un côté d'une couche comprenant un copolymère d'éthylène-alcool vinylique.
